# FASCICULE DE BREVET EUROPEEN

(11) **EP 3 777 346 B1**
(45) Date de publication et mention de la délivrance du brevet: **04.10.2023**
(21) Numéro de dépôt: 19720961.2
(22) Date de dépôt: 03.04.2019
(51) Int. Cl.: H04W 48/20, H04W 24/04, H04W 48/12

(54) **PROCÉDÉS ET DISPOSITIFS D'ATTACHEMENT MULTIPLE D'UN TERMINAL MOBILE À DES POINTS D'ACCÈS DANS DES GROUPES DE RISQUE PARTAGÉ**
VERFAHREN UND VORRICHTUNGEN ZUM MEHRFACHEN VERBINDEN EINES MOBILEN ENDGERÄTS MIT ZUGANGSPUNKTEN IN GRUPPEN MIT GETEILTEM RISIKO
METHODS AND DEVICES FOR MULTIPLE ATTACHMENT OF A MOBILE TERMINAL TO ACCESS POINTS IN SHARED RISK GROUPS

(30) Priorité: 11.04.2018 FR 1853144
(43) Date de publication de la demande: 17.02.2021
(73) Titulaire: Orange, 92130 Issy-les-Moulineaux (FR)
(72) Inventeur: HARTMANN, Charles, 92326 CHÂTILLON CEDEX (FR); MOUQUET, Antoine, 92326 CHÂTILLON CEDEX (FR)
(86) Numéro de dépôt international: PCT/FR2019/050771
(87) Numéro de publication internationale: WO 2019/197752

(56) Documents cités:
- EP-A1- 2 739 081
- CA-A1- 2 350 449
- US-A1- 2005 090 283

## Description

### 1. Domaine de l'invention

L'invention se situe dans le domaine des réseaux cellulaires et plus particulièrement celui du taux de disponibilité d'un service de télécommunication au travers de l'attachement d'un terminal mobile à plusieurs points d'accès d'un réseau cellulaire à la fois.

### 2. Etat de la technique antérieure

Une manière classique pour accroître le taux de disponibilité d'un service de télécommunication est de réaliser un double attachement de l'installation terminale au réseau. Par exemple, l'autocommutateur privé d'une entreprise peut être raccordé au réseau public via deux liens distincts. Cependant, pour qu'il en résulte un accroissement de la disponibilité du service, il est nécessaire que ces deux liens de raccordement ne partagent pas les mêmes risques suite à la défaillance d'une ressource commune. On s'assure par exemple qu'ils passent par des pénétrations bâtiments et tranchées différentes, empruntent des itinéraires réseaux séparés et aboutissent à des répartiteurs, des unités de raccordement ou à des commutateurs différents.

Dans l'art antérieur, le technicien en charge de concevoir le raccordement de l'installation terminale s'assure que les deux liens mis en place utilisent des infrastructures physiques et des équipements réseaux indépendants. Ceci est une opération triviale pour les installations terminales raccordées de manière filaire, mais cette méthode n'est pas adaptable aux réseaux cellulaires, pour lesquelles le point d'attachement d'un terminal au réseau est susceptible de changer à tout moment.

Il existe déjà des terminaux cellulaires capable de réaliser un double attachement à un (ou plusieurs) réseau(x); il s'agit typiquement de terminaux à deux cartes SIM.

Cependant, le double attachement est destiné non pas à accroître la disponibilité du service, mais à bénéficier simultanément des services respectifs associés aux deux cartes SIM (par ex. être joignable sur deux numéros). De tels terminaux n'ont aucune visibilité sur la diversité des ressources réseaux utilisées et par conséquent n'ont pas la possibilité de s'assurer que les deux attachements ne partagent pas les mêmes risques. Ils pourraient faire en sorte de sélectionner deux cellules différentes pour chacun des attachements en examinant le paramètre "Cell ID" diffusé par chaque cellule, mais il est tout à fait possible que les deux cellules sélectionnées soient portées par la même station de base, ou deux stations de base situées sur le même site et partageant les mêmes ressources physiques pour le raccordement à leur réseau de collecte puis au réseau coeur, ou pour leur alimentation énergétique.

Par exemple, chaque station de base dispose de ses propres raccordements en fibre optique, mais les fibres optiques partagent un même câble, fourreau ou élément de génie civil. Ou encore, les stations de bases appartiennent à 2 opérateurs différents mais sont co-localisées sur le même site et partagent le même lien de raccordement du site radio au réseau de collecte.

Le document CA 2 350 449 A1 décrit l'identification de groupes de risque partagés dans un réseau fixe. Une fois que ces groupes ont été déterminés, un chemin primaire entre deux points est déterminé, puis un chemin secondaire. Ces chemins ne font pas partie du même groupe de risque partagé afin de réduire le risque de perdre la connectivité. Le document EP 2 739 081 décrit un terminal qui est connecté à un premier point d'accès. Ce point d'accès perd la connectivité avec le réseau coeur. Le point d'accès réalise une interface radio avec un autre point d'accès qui va partager sa liaison avec le réseau coeur afin que le premier point d'accès puisse communiquer avec le réseau coeur.

Un des buts de l'invention est de remédier à ces inconvénients de l'état de la technique.

### 3. Exposé de l'invention

L'invention vient améliorer la situation à l'aide d'un procédé d'attachement multiple d'un terminal mobile à des points d'accès d'une pluralité de points d'accès à un ou plusieurs réseaux cellulaires, le procédé étant mis en oeuvre par le terminal et comprenant les étapes suivantes :
- réception de messages diffusés par des points d'accès de la pluralité, comprenant un identifiant, dit identifiant GRP, relatif à l'appartenance d'une ressource utilisée par le point d'accès respectif à un ensemble de ressources associées à un facteur de risque commun,
- premier attachement du terminal, à un premier point d'accès de la pluralité,
- second attachement du terminal, à un second point d'accès de la pluralité, sélectionné en fonction de son identifiant GRP et de l'identifiant GRP du premier point d'accès.

Dans l'état de la technique antérieur, les terminaux mobiles et les réseaux cellulaires n'exploitent pas et n'échangent pas d'informations relatives à l'existence de risque partagé en termes de disponibilité. Grâce à l'invention, un terminal mobile déjà attaché au réseau cellulaire au travers d'un point d'accès tel qu'une station de base, et souhaitant mettre en place ou modifier un autre attachement au travers d'une autre station de base, pourra faire en sorte que cette autre station de base soit sélectionnée de façon à ce qu'elle n'utilise pas une ressource présentant les mêmes risques que la première le première station de base, c'est-à-dire n'utilise pas une ressource se trouvant dans le même groupe de risque partagé. Ainsi, un dysfonctionnement affectant cette ressource n'affectera qu'une seule des deux stations de base, et au moins une des connexions établies par le terminal grâce à ses attachements ne sera pas affectée.

On comprend qu'un des buts recherchés par le procédé selon l'invention est de diversifier les groupes de risque partagé utilisés par le terminal.

Lorsque deux stations de base diffusent des GRP différents, cela indique l'absence de risque commun entre elles, lié à la diversité des ressources utilisée, ou à l'absence d'éléments communs dans ces ressources.

Lorsque deux stations de base diffusent des GRP identiques, cela indique l'existence ou tout au moins la forte probabilité de l'existence d'un facteur de risque partagé, dû à l'utilisation d'une même ressource parfois critique.

Les GRP sont des entiers, par exemple codés sur 16, 32 ou 48 bits. Ils peuvent également être des chaines de caractères alphanumériques.

Selon un aspect du procédé d'attachement, il comprend en outre une étape de comparaison entre l'identifiant GRP du premier point d'accès et les identifiants GRP des autres points d'accès de la pluralité, un des autres points d'accès étant sélectionné comme second point d'accès si son identifiant GRP est différent de celui du premier point d'accès.

Dans les réseaux de transport, la notion de Shared Risk Group (SRG), ou Groupe de Risque Partagé (GRP) permet d'identifier un ensemble de ressources réseaux, qui sont associées à un facteur de risque commun. Les transmetteurs distinguent plusieurs situations de risque partagé:
- Shared risk link group (SRLG): liens partageant un risque commun;
- Shared risk node group (SRNG): noeuds partageant un risque commun;
- Shared risk equipment group (SREG): équipements partageant un risque commun.

Selon le procédé proposé, cette notion de risque partagé est étendue aux réseaux cellulaires et un GRP peut, par exemple, être l'ensemble des stations de base partageant le même pylône. Le terminal n'a pas besoin de connaître la nature exacte du risque, qu'il soit sur un lien optique, ou sur un pylône pour reprendre l'exemple ci-dessus. Il lui suffit de savoir à quel GRP appartient une station de base candidate, et de sélectionner pour son second attachement une station de base dont le GRP est différent de celui de la station de base à laquelle il est déjà attaché.

Le GRP peut par exemple être un nombre déterminé par l'opérateur en charge du déploiement du réseau cellulaire.

Pour que le terminal reçoive les GRP des stations de base, il suffit d'ajouter le GRP aux informations normalement diffusées de façon répétée par une station de base vers les terminaux qui se trouvent dans la cellule couverte par la station de base. Dans la technique antérieure, ces informations sont diffusées dans des System Information Blocks en LTE par exemple, qui comprennent par exemple des champs tels que PLMN Id (identifiant de réseau mobile terrestre, c'est-à-dire cellulaire), Tracking Area Code (subdivision d'un réseau cellulaire), Cell Id (identifiant de cellule).

Selon un aspect du procédé d'attachement, les identifiants GRP sont des vecteurs de dimension supérieure à 1 et l'étape de comparaison comprend une étape de calcul de distance entre l'identifiant GRP du premier point d'accès et les identifiants GRP des autres points d'accès de la pluralité, un des autres points d'accès étant sélectionné si la distance entre son identifiant GRP et celui du premier point d'accès est non nulle.

Dans certaines mises en oeuvre, les stations de base du réseau cellulaire peuvent appartenir à plusieurs groupes de risque partagé à la fois, de niveaux différents. Par exemple, un groupe de niveau A pour le pylône, un groupe de niveau B pour le câble optique de raccordement de la station de base au réseau de collecte, un groupe de niveau C pour le conduit ou la tranchée abritant le câble, etc.

Grâce à cet aspect, même si toutes les stations de bases appartiennent au même groupe d'un certain niveau, une seconde station de base peut être sélectionnée en fonction d'un groupe à un autre niveau qui est plus différentiateur. De préférence, la seconde station de base qui est sélectionnée est celle qui maximise la distance entre son vecteur GRP et celui de la première station de base.

Il est également possible d'utiliser des groupes de risque partagé imbriqués hiérarchiquement, par exemple pour des réseaux de taille réduite tels que des réseaux d'entreprise.

Selon un aspect du procédé d'attachement, il comprend une étape d'émission vers l'un des premier ou second points d'accès d'un message comprenant l'identifiant GRP de l'autre point d'accès.

Grâce à cet aspect, la seconde station de base connait l'identifiant GRP diffusé par la première station de base et est en mesure d'assurer une diversité dans le choix des équipements de coeur de réseau impliqués dans la connexion du terminal. Il suffit pour cela que la seconde station de base connaisse les équipements de coeur de réseau associés à l'identifiant GRP de la première station de base. Ces équipements de réseau peuvent ainsi être évités par la seconde station de base, dans la mesure du possible. Ainsi, le terminal peut utiliser un message existant tel qu'une requête d'attachement vers la seconde station de base, ou une la réponse à une requête de reconfiguration de connexion de la seconde station de base, en y ajoutant l'identifiant GRP de la première.

Selon un aspect du procédé d'attachement, il comprend une étape d'émission vers le premier point d'accès et vers le second point d'accès d'un message comprenant les identifiants GRP reçus.

Grâce à cet aspect, le terminal émet vers la première et la seconde station de base un message comprenant tous les identifiants GRP qu'il a reçus. Ainsi, le terminal peut utiliser un message existant tel que le rapport de mesures que remonte un terminal mobile à la station de base à laquelle il est connecté pour préparer le déclenchement d'un éventuel "handover", en y ajoutant les identifiants GRP.

Selon un aspect du procédé d'attachement, l'étape de premier attachement et/ou l'étape de second attachement comprend une sous-étape de réception d'un message de signalisation dédiée au terminal, comprenant un identifiant relatif à l'appartenance à un groupe de risque partagé d'une ressource du coeur de réseau utilisée par le terminal, dit identifiant GRPC.

Certains groupes de risque partagé sont spécifiques à la connexion d'un terminal au réseau coeur au travers de son attachement à la station de base, mais ne sont pas connus par la station de base avant l'attachement du terminal. La station de base ne peut donc pas diffuser les identifiants de ces groupes de risque partagé. C'est le cas par exemple des groupes identifiant un équipement du coeur de réseau impliqué dans la connexion d'un terminal, comme par exemple un équipement de gestion de la mobilité tel qu'un MME.

Grâce à cet aspect, le terminal reçoit l'identifiant GRPC et pourra le communiquer à une nouvelle station de base lors d'une étape ultérieure de mobilité ou d'attachement. Cette station de base pourra opérer une sélection sur la base de cette information, dans le but d'assurer une diversité dans le choix des équipements de coeur de réseau impliqués dans la connexion du terminal.

Le message de signalisation dédiée au terminal peut être un message existant modifié pour inclure un ou plusieurs identifiants GRPC, tel qu'une réponse d'attachement émise par une station de base vers un terminal. Un ou plusieurs identifiants GRP peuvent également y être inclus.

Selon un aspect du procédé d'attachement, l'étape de second attachement comprend une sous-étape d'émission d'un message de signalisation dédiée au terminal comprenant l'identifiant GRPC.

Grâce à cet aspect, la station de base sélectionnée par le terminal obtient le GRPC et est en mesure d'assurer une diversité dans le choix des équipements de coeur de réseau utilisés pour la connexion du terminal. Le message de signalisation dédiée au terminal peut être un message existant modifié pour inclure un identifiant GRPC, tel qu'une requête d'attachement émise par un terminal vers une station de base. Un ou plusieurs identifiants GRP peuvent également y être inclus.

Les différents aspects du procédé d'attachement qui viennent d'être décrits peuvent être mis en oeuvre indépendamment les uns des autres ou en combinaison les uns avec les autres.

L'invention concerne aussi un procédé de sélection d'une ressource pour l'attachement multiple d'un terminal mobile à des points d'accès d'une pluralité de points d'accès à un ou plusieurs réseaux cellulaires, le procédé étant mis en oeuvre par un des points d'accès de la pluralité et comprenant les étapes suivantes :
- diffusion d'un message vers le terminal et vers d'autres terminaux sous la couverture du point d'accès, comprenant un identifiant, dit identifiant GRP, relatif à l'appartenance d'une ressource utilisée par le point d'accès à un ensemble de ressources associées à un facteur de risque commun,
- réception d'un message en provenance du terminal comprenant un identifiant GRP d'un autre point d'accès,
- sélection d'une ressource pour le terminal, en fonction de l'identifiant GRP du point d'accès et de l'identifiant GRP de l'autre point d'accès.

Ce procédé est complémentaire du procédé d'attachement multiple qui a été décrit plus haut. Il permet à une station de base de disposer des identifiants GRP associés à d'autres stations de base. Ainsi, lorsqu'un terminal sous sa couverture et sous celle de ces autres stations de base nécessite une attribution ou une modification de ressource, la station de base est en mesure de sélectionner une ressource de façon à ce que les ressources utilisées pour le terminal soient distribuées dans des groupes de risque partagé différents. Ceci garantit qu'au moins un des attachements du terminal ne sera pas affecté par le dysfonctionnement de la ressource sélectionnée.

Le message en provenance du terminal, comprenant l'identifiant GRP d'une autre station de base, peut avantageusement être un message existant modifié pour inclure l'identifiant GRP, tel que par exemple une requête d'attachement, une réponse de requête de reconfiguration, ou un rapport de mesures.

Selon un aspect du procédé de sélection, le message du terminal comprend en outre un identifiant, dit identifiant GRPC, relatif à l'appartenance d'une ressource du coeur de réseau utilisée par le terminal en association avec l'autre point d'accès, et cet identifiant GRPC est pris en compte dans l'étape de sélection.

Grâce à cet aspect, la station de base obtient l'identifiant GRPC et est en mesure de maintenir une diversité au niveau des groupes de risque partagé pour les équipements de coeur de réseau utilisés par la connexion du terminal passant par cette station de base.

L'invention concerne encore un dispositif d'attachement multiple d'un terminal mobile à des points d'accès d'une pluralité de points d'accès à un ou plusieurs réseaux cellulaires, le dispositif comprenant un récepteur, un émetteur, un processeur et une mémoire couplée au processeur avec des instructions destinées à être exécutées par le processeur pour :
- recevoir des messages diffusés par des points d'accès de la pluralité, comprenant un identifiant dit identifiant GRP relatif à l'appartenance d'une ressource utilisée par le point d'accès respectif à un ensemble de ressources associées à un facteur de risque commun,
- effectuer un premier attachement du terminal, à un premier point d'accès de la pluralité,
- effectuer un second attachement du terminal, à un second point d'accès de la pluralité, sélectionné en fonction de son identifiant GRP et de l'identifiant GRP du premier point d'accès.

Ce dispositif, apte à mettre en oeuvre dans tous ses modes de réalisation le procédé d'attachement qui vient d'être décrit, est destiné à être mis en oeuvre dans un terminal mobile.

L'invention concerne encore un dispositif de sélection d'une ressource pour l'attachement multiple d'un terminal mobile à des points d'accès d'une pluralité de points d'accès à un ou plusieurs réseaux cellulaires, le dispositif comprenant un récepteur, un émetteur, un processeur et une mémoire couplée au processeur avec des instructions destinées à être exécutées par le processeur pour :
- diffuser un message vers le terminal et vers d'autres terminaux sous la couverture du point d'accès, comprenant un identifiant, dit identifiant GRP, relatif à l'appartenance d'une ressource utilisée par le point d'accès à un ensemble de ressources associées à un facteur de risque commun,
- recevoir un message en provenance du terminal comprenant un identifiant GRP d'un autre point d'accès,
- sélectionner une ressource pour le terminal, en fonction de l'identifiant GRP du point d'accès et de l'identifiant GRP de l'autre point d'accès.

Ce dispositif, apte à mettre en oeuvre dans tous ses modes de réalisation le procédé de sélection qui vient d'être décrit, est destiné à être mis en oeuvre dans un point d'accès à un réseau cellulaire.

L'invention concerne aussi un programme d'ordinateur comprenant des instructions pour la mise en oeuvre des étapes du procédé d'attachement qui vient d'être décrit, lorsque ce programme est exécuté par un processeur. L'invention vise aussi un support d'informations lisible par un terminal mobile, et comportant des instructions d'un programme d'ordinateur tel que mentionné ci-dessus.

L'invention concerne aussi un programme d'ordinateur comprenant des instructions pour la mise en oeuvre des étapes du procédé de sélection qui vient d'être décrit, lorsque ce programme est exécuté par un processeur. L'invention vise aussi un support d'informations lisible par un point d'accès à un réseau cellulaire, et comportant des instructions d'un programme d'ordinateur tel que mentionné ci-dessus.

Les programmes mentionnés ci-dessus peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Les supports d'informations mentionnés ci-dessus peuvent être n'importe quelle entité ou dispositif capable de stocker le programme. Par exemple, un support peut comporter un moyen de stockage, tel qu'une ROM, par exemple un CD ROM ou une ROM de circuit microélectronique, ou encore un moyen d'enregistrement magnétique. Un tel moyen de stockage peut par exemple être un disque dur, une mémoire flash, etc. D'autre part, un support d'informations peut être un support transmissible tel qu'un signal électrique ou optique, qui peut être acheminé via un câble électrique ou optique, par radio ou par d'autres moyens. Un programme selon l'invention peut être en particulier téléchargé sur un réseau de type Internet.

Alternativement, un support d'informations peut être un circuit intégré dans lequel un programme est incorporé, le circuit étant adapté pour exécuter ou pour être utilisé dans l'exécution des procédés en question.

### 4. Présentation des figures

D'autres avantages et caractéristiques de l'invention apparaitront plus clairement à la lecture de la description suivante d'un mode de réalisation particulier de l'invention, donné à titre de simple exemple illustratif et non limitatif, et des dessins annexés, parmi lesquels :
- la figure 1 présente de façon schématique un réseau cellulaire où l'invention est mise en oeuvre,
- la figure 2 présente un diagramme de flux correspondant aux procédés d'attachement multiple d'un terminal mobile, et de sélection d'une ressource pour l'attachement multiple d'un terminal mobile, selon un premier aspect de l'invention,

- la figure 3 présente un diagramme de flux correspondant aux procédés d'attachement multiple d'un terminal mobile, et de sélection d'une ressource pour l'attachement multiple d'un terminal mobile, selon d'autres aspects de l'invention
- la figure 4 présente la structure d'un dispositif d'attachement multiple d'un terminal mobile selon un aspect de l'invention,
- la figure 5 présente la structure d'un dispositif de sélection d'une ressource pour l'attachement multiple d'un terminal mobile selon un aspect de l'invention.

### 5. Description détaillée d'au moins un mode de réalisation de l'invention

Dans la suite de la description, on présente des exemples de plusieurs modes de réalisation de l'invention se basant sur un double attachement d'un terminal mobile à des stations de base d'un réseau cellulaire relié avec un coeur de réseau, mais l'invention s'applique également à d'autres configurations, telles que plus de deux attachements d'un même terminal à des stations de bases de plusieurs réseaux cellulaires, reliés à plusieurs coeurs de réseau, etc.

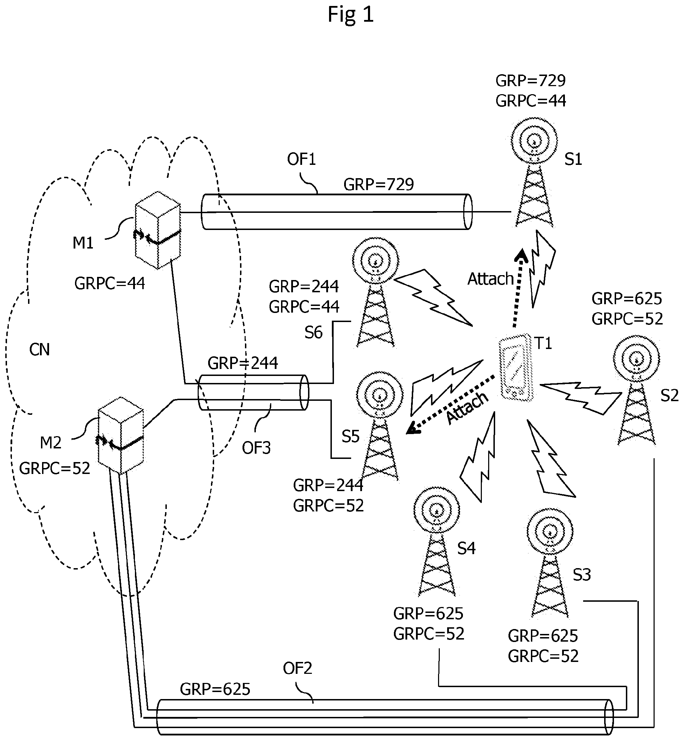

La **figure 1** présente de façon schématique un réseau cellulaire où l'invention est mise en oeuvre.

Chaque point d'accès du réseau cellulaire diffuse par son interface radio une information caractérisant l'appartenance de ce point d'accès ou de la cellule à un groupe de risque partagé, ou GRP. Le GRP peut par exemple être un nombre entier déterminé pour chaque point d'accès par les personnes en charge du déploiement du réseau.

Selon l'invention, chaque point d'accès fournit un GRP dans un message d'information système (tels que SIB - System Information Block en 4G) diffusé dans la cellule, qui contient déjà des informations de type PLMN ID, TAC (Tracking Area Code), Cell ID, etc.

La figure 1 représente un terminal mobile T1 recevant les signaux de 6 points d'accès, ici des stations de base, S1 à S6, qui peuvent être des BTS d'un réseau 2G, des NodeB d'un réseau 3G, des eNodeB d'un réseau 4G, des gNB d'un réseau 5G, ou tout autre point d'accès à un réseau sans fil. Ces points d'accès peuvent être de types différents. Ces points d'accès sont raccordés à un (ou plusieurs) coeur(s) de réseau CN (au sens large, peut inclure BSC (2G) et RNC (3G)), par des liens qui peuvent partager une même fibre optique OF1, OF2 ou OF3. Dans cet exemple, les points d'accès qui partagent une même fibre optique diffusent le même GRP, comme par exemple les stations de base S5 et S6 qui diffusent un GRP de valeur 244 correspondant à la fibre optique OF3. Ainsi, le terminal T1 peut réaliser un double attachement sur deux points d'accès ne partageant pas la même fibre optique, ce qui le prémunit d'une perte de connectivité en cas de rupture d'une fibre optique, en choisissant deux points d'accès diffusant des GRP différents.

Ce même schéma s'applique aux éléments de génie civil (antennes, conduites, chambres), aux fourreaux protégeant un ensemble de fibre optique, aux éléments de pénétration dans un bâtiment ou centre.

Le schéma peut également s'appliquer aux éléments d'un répartiteur ou à un splitter PON (réseaux de distribution FTTH GPON, XGS-PON, NGPON2).

Le schéma peut prendre en compte d'autres technologies pour les raccordements :
- micro-onde (configuration point à point ou point à multipoints),
- xDSL sur support cuivre.

Une variante présente une mise en oeuvre similaire où est également prise en compte la diversité des risques dans le coeur de réseau CN: les points d'accès S1 à S6 qui partagent un même équipement de coeur de réseau diffusent le même GRP. Le terminal T1 va alors faire une sélection différente de points d'accès et sera prémuni d'une perte de connectivité non seulement en cas de rupture d'une fibre optique mais aussi en cas de défaillance d'un équipement de coeur de réseau. On peut évidemment étendre les cas présentés en prenant en compte dans la définition des GRP non pas un ou deux mais n'importe quel nombre d'éléments dans la chaîne de ressources (équipements, liens, infrastructure, etc.) mises en oeuvre pour fournir la connectivité au terminal.

Le point d'accès peut donc fournir non pas un mais plusieurs GRP, par exemple un premier GRP associé aux risques dans le réseau d'accès et un second GRP associé aux risques dans le réseau coeur. Ceci permet de prendre en compte des configurations plus complexes comme illustré par la figure 1.

Un GRP n'est pas toujours fourni au terminal dans un message d'information système diffusé dans la cellule par le point d'accès, il peut aussi être fourni au terminal dans un message de signalisation dédiée entre le terminal et le point d'accès. L'avantage est que si certains éléments du coeur de réseau CN sont sélectionnés en fonction de l'identité du terminal, alors le GRP peut être fourni en en tenant compte. Ainsi différents terminaux pourront recevoir différents GRP du même point d'accès, parce qu'on leur a affectés différents équipements dans le coeur de réseau. L'inconvénient est que le terminal ne connaît pas le GRP avant d'initier son attachement. C'est pourquoi il faut distinguer les GRP diffusables par le point d'accès avant un premier attachement du terminal, des GRP que le terminal peut obtenir uniquement après un premier attachement au point d'accès. Ces derniers sont appelés GRPC (C pour "coeur", ou "core") dans la suite du document. Par exemple, lors de son attachement au point d'accès S1, le terminal obtient dans un message de signalisation dédié la valeur de GRPC= 44, parce que l'élément de coeur de réseau associé au terminal T1 est l'élément M1, qui est par exemple un MME, c'est-à-dire un équipement gestionnaire de mobilité, et que cet élément M1 fait partie du groupe de risque partagé identifié par GRPC=44.

Ainsi, les GRP sont fournis dans un message d'information système diffusé dans la cellule par les points d'accès S1 à S6, et les GRPC sont fournis dans un message de signalisation dédiée au terminal T1.

Le terminal ne connaît pas le GRPC avant d'initier son premier attachement, mais cet inconvénient peut être résolu lors de son second attachement. En effet, le terminal qui a déjà un premier attachement au réseau et qui initie un second attachement, peut fournir les GRP et les GRPC reçus pour le premier attachement. Ainsi, lorsque le réseau a un choix possible dans les éléments à utiliser pour cet attachement (lien optique "backhaul", équipement coeur de réseau, ...), l'élément du réseau en charge de cette sélection peut prendre en compte le GRP et le GRPC déjà utilisé par le terminal et réaliser la sélection de manière à obtenir un GRP et/ou un GRPC différent pour le deuxième attachement. Pour continuer l'exemple précédent, si le terminal T1 s'attache au point d'accès S5 pour un second attachement au réseau cellulaire, S5 ayant été sélectionné parce que son GRP=244 est différent du GRP=279 du premier attachement (correspondant respectivement aux liens optiques distincts OF3 et OF1), le terminal T1 fournit au point d'accès S5 le GRPC obtenu auprès du point d'accès S1. Ainsi, pour gérer le second attachement du terminal T1, un autre MME que M1 peut être choisi, M2 par exemple, donc le GRPC=52 est différent du GRPC=44 du point d'accès S1.

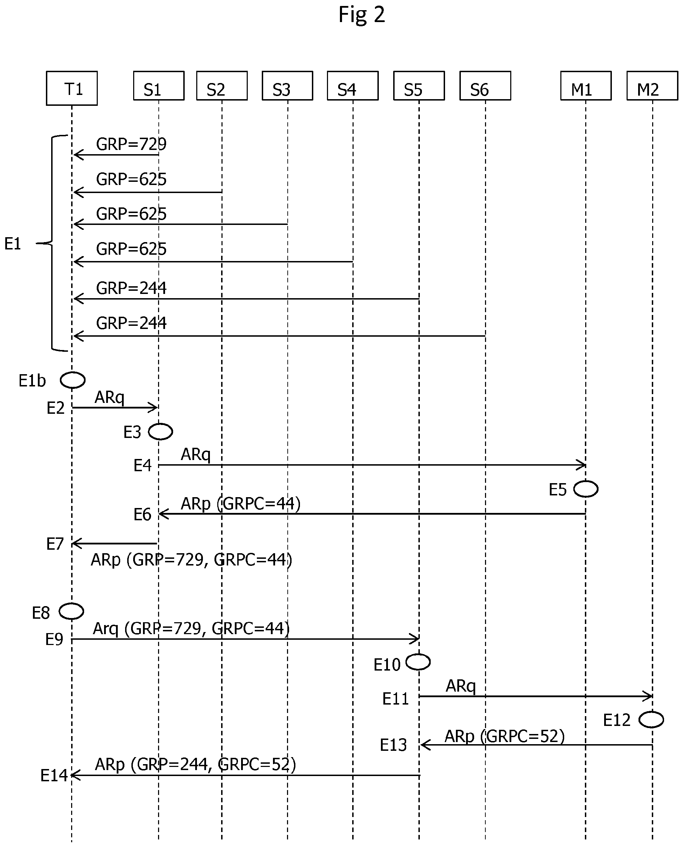

La **figure 2** présente un diagramme de flux correspondant aux procédés d'attachement multiple d'un terminal mobile, et de sélection d'une ressource pour l'attachement multiple d'un terminal mobile, selon un premier aspect de l'invention.

Le terminal T1 est sous la couverture radio des stations de base S1 à S6 d'un réseau cellulaire, ce qui lui permet de recevoir de chacune d'elle à intervalles plus ou moins réguliers un message d'information système. La diffusion d'au moins un de ces messages par station de base, et leur réception par le terminal T1, est schématisée par l'étape E1. Selon un aspect de l'invention, un tel message d'information système comprend, en sus des informations habituelles, un identifiant de groupe de risque partagé GRP correspondant à un lien de fibre optique reliant la station de base respective avec le réseau coeur CN. L'étape E1 peut être incomplète en ce sens que certaines des stations de bases peuvent ne pas avoir diffusé leur message d'information système au moment où l'étape E8 commence. Dans ce cas, seules les stations de base ayant diffusé au moins une fois leur message d'information système seront prises en compte à partir de l'étape E8.

Lors d'une étape E1b, le terminal T1 sélectionne la station de base S1 pour un premier attachement. La sélection pour ce premier attachement peut être effectuée selon une méthode connue. Le terminal T1 peut mémoriser la valeur GRP=729 correspondant à la station de base S1.

Lors d'une étape E2, selon une technique connue, le terminal T1 émet une requête d'attachement ARq vers la station de base S1.

Lors d'une étape E3, selon une technique connue, la station de base S1 sélectionne dans le réseau coeur CN le MME M1 comme équipement de gestion de mobilité pour l'attachement du terminal T1.

Lors d'une étape E4, selon une technique connue, la station de base S1 émet une requête d'attachement ARq vers le MME M1.

Lors d'une étape E5, selon une technique connue, la procédure d'attachement du terminal T1 est traitée dans le réseau coeur CN par le MME M1.

Lors d'une étape E6, une réponse d'attachement ARp est émise par le MME M1 vers la station de base S1. Selon un aspect de l'invention, cette réponse ARp comprend, en sus des informations habituelles, un identifiant de groupe de risque partagé coeur de réseau GRPC correspondant à l'équipement MME M1. En l'occurrence, le paramètre GRPC de valeur 44 est compris dans la réponse ARp.

Lors d'une étape E7, une réponse d'attachement ARp est émise par la station de base S1 vers le terminal T1. Selon un aspect de l'invention, cette réponse ARp comprend, en sus des informations habituelles, le paramètre GRPC avec la valeur 44. Eventuellement, cette réponse ARp comprend également le paramètre GRP avec la valeur 729 correspondant à la station de base S1, ce qui est utile si lors de l'étape E1b , le terminal T1 n'a pas mémorisé ce GRP.

Lors d'une étape E8, le terminal T1 sélectionne une station de base pour un second attachement au réseau cellulaire. Ce second attachement peut être coexistant avec le premier, c'est-à-dire qu'il n'entraine pas la libération du premier attachement. Selon un aspect de l'invention, le terminal T1 utilise les GRP diffusés par les stations de base S1 à S6 reçus lors de l'étape E1, pour sélectionner une seconde station de base dont le GRP est différent de celui de la station de base S1 déjà utilisée pour le premier attachement. Le terminal T1 sélectionne la station de base S5 car son GRP=244, ce qui est différent de la station S1 avec son GRP=279. Ainsi les risques propres aux liens optiques reliant les stations de base S1 et S5 au réseau coeur sont répartis sur 2 liens distincts, OF1 et OF3. Le terminal T1 n'a pas besoin de savoir exactement à quoi correspond le GRP. Si plusieurs groupes de risque partagé sont organisés pour les stations de base S1 à S6, par exemple un GRP, GRP-1 par exemple pour le lien optique et un autre GRP, GRP-2 par exemple pour le pylône portant les antennes, il suffit que le terminal puisse les distinguer par leur nom, GRP-1 ou GRP-2, sans qu'un de ces noms n'indique la nature de la ressource dont les risques sont partagés.

Lors d'une étape E9, le terminal T1 émet une requête d'attachement ARq vers la station de base S5. Selon un aspect de l'invention, la requête ARq comprend, en sus des informations habituelles, le paramètre GRP avec la valeur 279, c'est-à-dire le GRP du premier attachement avec la station de base S1. Avantageusement, la requête ARq comprend également le paramètre GRPC avec la valeur 44, c'est-à-dire le GRPC du premier attachement avec la station de base S1.

Lors d'une étape E10, la station de base S5 sélectionne dans le réseau coeur CN un MME comme équipement de gestion de mobilité pour l'attachement du terminal T1. Grâce à la requête ARq reçue lors de l'étape E9, la station de base S5 connaît le GRPC déjà utilisé par le terminal T1 pour son premier attachement avec la station de base S1, c'est-à-dire GRPC=44. Ayant le choix entre les MME M1 et M2, la station de base S5 sélectionne alors le MME M2 car son GRPC dont la valeur est 52 est différent. Ainsi les risques propres aux MME reliés aux stations de base S1 et S5 sont répartis sur 2 MME distincts.

Lors d'une étape E11, selon une technique connue, la station de base S5 émet une requête d'attachement ARq vers le MME M2.

Lors d'une étape E12, selon une technique connue, la procédure de second attachement du terminal T1 est traitée dans le réseau coeur CN par le MME M2.

Lors d'une étape E13, une réponse d'attachement ARp est émise par le MME M2 vers la station de base S5. Selon un aspect de l'invention, cette réponse ARp comprend, en sus des informations habituelles, un GRPC de valeur 52 est compris dans la réponse ARp.

Lors d'une étape E14, une réponse d'attachement ARp est émise par la station de base S5 vers le terminal T1. Selon un aspect de l'invention, cette réponse ARp comprend, en sus des informations habituelles, le paramètre GRPC avec la valeur 52. Eventuellement, cette réponse ARp comprend également le paramètre GRP avec la valeur 244 correspondant à la station de base S5, ce qui est utile si lors de l'étape E8 le terminal T1 n'a pas associé cette valeur de GRP à la station de base S5.

Si le terminal T1 souhaite réaliser un troisième attachement, les étapes E8 à E14 peuvent être répétées. Lors des nouvelles occurrences des étapes E8, E9 et E10, les GRP et GRPC de tous les précédents attachements sont pris en compte.

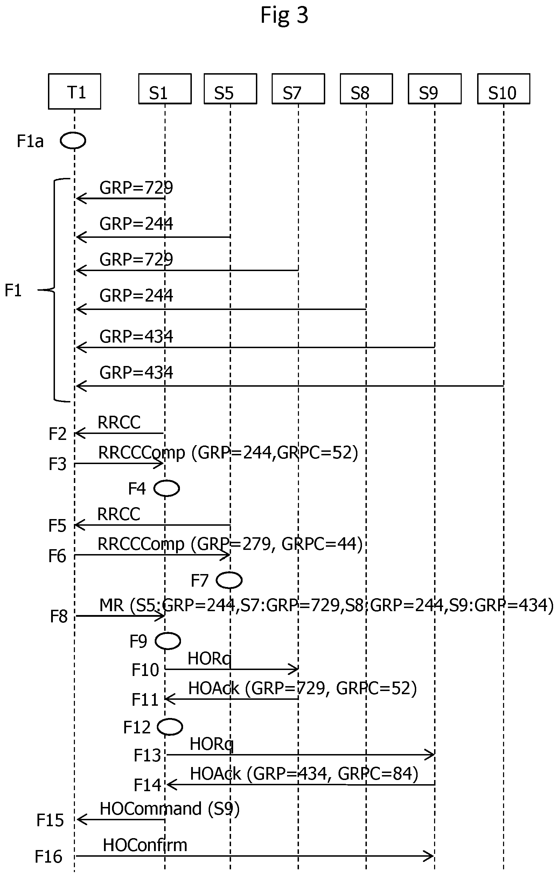

La **figure 3** présente un diagramme de flux correspondant aux procédés d'attachement multiple d'un terminal mobile, et de sélection d'une ressource pour l'attachement multiple d'un terminal mobile, selon d'autres aspects de l'invention.

La description qui précède porte sur la sélection initiale de stations de base (c'est-à-dire de cellules, ou plus généralement de points d'accès) pour réaliser un double (ou multiple) attachement du terminal T1. Une fois le terminal ainsi attaché, il est susceptible de changer de cellules, notamment en raison de sa mobilité, par exemple lors d'une étape F1a. Suite à cette étape F1a le terminal T1 se trouve sous la couverture des stations de base S1, S5, S7, S8, S9 et S10. Il n'est plus sous la couverture des cellules S2, S3, S4 ou S6.

En mode "veille" (sans communication active), selon l'état de l'art des réseaux cellulaires, le terminal sélectionne une nouvelle station de base de façon autonome en utilisant les informations diffusées par les stations de base dont il est sous couverture et du niveau de signal de chacune de ces stations de base, et ne se signale au réseau que si la nouvelle station de base sélectionnée diffuse une information de zone de localisation autre que celles dans lesquelles il est enregistré; dans le cas contraire, le terminal se contente de rester à l'écoute de cette station de base, et on dit qu'il "campe" dessus. Dans le cade de l'invention, le terminal procédera de même pour chacun de ses stations de base points d'attachements, et utilisera en outre les GRP diffusés par ces stations de base afin de toujours (dans la mesure du possible) camper sur deux (ou plus) cellules diffusant des GRP différents.

Pour le changement de cellule mode "connecté" (avec une communication active), selon l'état de l'art des réseaux cellulaires, la station de base communique au terminal un liste de cellules voisines, le terminal effectue périodiquement des mesures sur ces cellules et remonte les résultats à sa station de base; celle-ci prend la décision d'effectuer un "handover" et décide de la cellule cible. Dans le cadre de l'invention, le terminal pourra être en mode connecté avec chacune des cellules par lesquelles il s'est attaché afin de pouvoir, en cas de défaillance d'une de ces cellules, utiliser immédiatement les autres pour les flux de communication actifs. Chacune des stations de bases s'assurera (autant que faire de peut) que les cellules cibles des "handovers" sont choisies de façons à garder la diversité de GRP, et de GRPC le cas échéant. Pour ce faire, le terminal informe chacune des stations de bases qu'il utilise, des GRP et GRPC associés aux autres stations de bases d'attachements qu'il utilise (par exemple en l'indiquant dans un des messages de signalisation utilisé pour passer en mode connecté (par exemple RRCConnectionReconfigurationComplete en 4G). En outre, dans une variante H1, le terminal ajoute dans les messages de remontée de mesures ("MeasurementReport"), les GRP diffusés par les cellules mesurées. Autrement, dans une variante H2, la station de base peut être configurée pour connaître les GRP des cellules voisines, ou bien, dans une variante H3, le leur demander dans un message de préparation du "handover"; dans ce dernier cas l'inconvénient est que l'information est obtenue après avoir sélectionné une cellule cible et donc il faut potentiellement essayer plusieurs candidates, mais l'avantage est que les GRP non diffusés peuvent être pris en compte. Ces variantes peuvent se combiner avantageusement, notamment H1 et H3 quand des GRP sont fournis dans un message d'information système diffusé dans la cellule et des GRPC sont fournis dans un message de signalisation dédiée entre le terminal et la station de base.

Les étapes F2 à F7 illustrent le cas où le terminal T1 revient en mode connecté après avoir été en mode veille. La sortie du mode veille peut être demandée par le terminal à la station de base dans une étape non illustrée, ou peut être déclenchée par un message de "paging" envoyé par la station de base au terminal.

Lors d'une étape F2, selon une technique connue, le terminal T1 reçoit un message de reconfiguration de connexion RRCConnectionReconfiguration de la part de la station de base S1.

En réponse, lors d'une étape F3, le terminal T1 émet vers la station de base S1 un message RRCConnectionReconfigurationComplete indiquant que sa reconfiguration est complète, ce message comprenant le GRP et le GRPC relatif au second attachement du terminal T1, c'est-à-dire l'attachement avec la station de base S5.

Lors d'une étape F4, la station de base S1 mémorise le GRP et le GRPC reçu en relation avec le terminal T1, afin de pouvoir sélectionner, le cas échéant, une nouvelle station de base avec des valeurs de GRP et GRPC différentes.

Lors d'une étape F5, selon une technique connue, le terminal T1 reçoit un message de reconfiguration de connexion RRCConnectionReconfiguration de la part de la station de base S5.

En réponse, lors d'une étape F6, le terminal T1 sort du mode veille et émet vers la station de base S5 un message RRCConnectionReconfigurationComplete indiquant que sa reconfiguration est complète, ce message comprenant le GRP et le GRPC relatif au premier attachement du terminal T1, c'est-à-dire l'attachement avec la station de base S1.

Lors d'une étape F7, la station de base S5 mémorise le GRP et le GRPC reçu en relation avec le terminal T1, afin de pouvoir sélectionner, le cas échéant, une nouvelle station de base avec des valeurs de GRP et GRPC différentes.

Un seul des groupes d'étapes F2 à F4 et F5 à F7 peut être exécuté, par exemple si le terminal T1 était en mode veille sur un seul de ses deux attachements.

Les étapes F8 à F16 illustrent la réalisation d'un "handover" à partir d'une des 2 stations de base d'attachement du terminal T1, en l'occurrence à partir de la station de base S1.

Lors d'une étape F8, le terminal T1 remonte vers la station de base S1 l'ensemble des mesures qu'il a effectuées sur les signaux reçus des stations de base sous la couverture desquelles il se trouve et dont la force du signal est supérieure à un seuil déterminé. En l'occurrence, suite au déplacement du terminal T1, ce sont les stations de base S5 (à laquelle il est encore attaché), S7, S8 et S9. Les signaux des stations S1 et S10 sont trop faibles. Selon un aspect de l'invention, le terminal T1 ajoute dans le message de mesures les GRP respectifs des stations de base, c'est-à-dire les valeurs S5:GRP=244, S7:GRP=729, S8:GRP=244, S9:GRP=434. Ainsi, la station de base S1, qui doit préparer un "handover" pour le terminal T1 puisque son signal est devenu trop faible, connaît les GRP des stations de base candidates à ce "handover", en plus des caractéristiques de leurs signaux.

Lors d'une étape F9, la station de base S1 sélectionne une station de base parmi les candidates. Les stations de base S5 et S8 sont exclues car leur GRP=244 est déjà utilisé sur le second attachement du terminal T1. La station de base S1 sélectionne alors la station de base S7, dont le GRP=729 est certes identique à celui de la station de base S1, mais le terminal T1 ne sera plus attaché à la station S1 suite au "handover".

Lors d'une étape F10, selon une technique connue, la station de base S1 émet une requête HandoverRequest vers la station de base S7.

Dans une variante selon l'invention, cette requête comprend le GRPC=44 de la station de base S1, ce qui permet à la station de base S7, si elle a le choix entre plusieurs MME, de ne pas sélectionner un MME appartenant à ce GRPC.

Lors d'une étape F11, la station de base S7 émet vers la station de base S1 une réponse HandoverAcknowledgement, qui selon un aspect de l'invention comprend le GRP=729 et le GRPC=52 de la station de base S7, en plus des informations habituelles.

Lors d'une étape F12, la station de base S1 détecte que le GRPC=52 est déjà utilisé dans un autre attachement du terminal T1, grâce par exemple aux informations reçues lors de l'étape F3. La station de base S7 n'est donc pas une bonne candidate au "handover" et la station de base S1 sélectionne à la place la station de base S9. La station de base S1 ne pouvait pas connaître à l'avance le GRPC de la station de base S7 car le GRPC n'est pas diffusé par les stations de base dans leur messages d'information système (étape F1).

Lors d'une étape F13, selon une technique connue, la station de base S1 émet une requête HandoverRequest vers la station de base S9.

Lors d'une étape F14, la station de base S9 émet vers la station de base S1 une réponse HandoverAcknowledgement, qui selon un aspect de l'invention comprend le GRP=434 et le GRPC=84 de la station de base S9, en plus des informations habituelles.

La station de base S1 ne détecte plus de GRPC déjà utilisé et, lors d'une étape F15, elle émet selon une technique connue, un message Handover Command vers le terminal T1.

Lors d'une étape F16, selon une technique connue, le terminal T1 effectue le "handover" et émet un message HandoverConfirm vers la station de base S9. La procédure de "handover" est alors terminée.

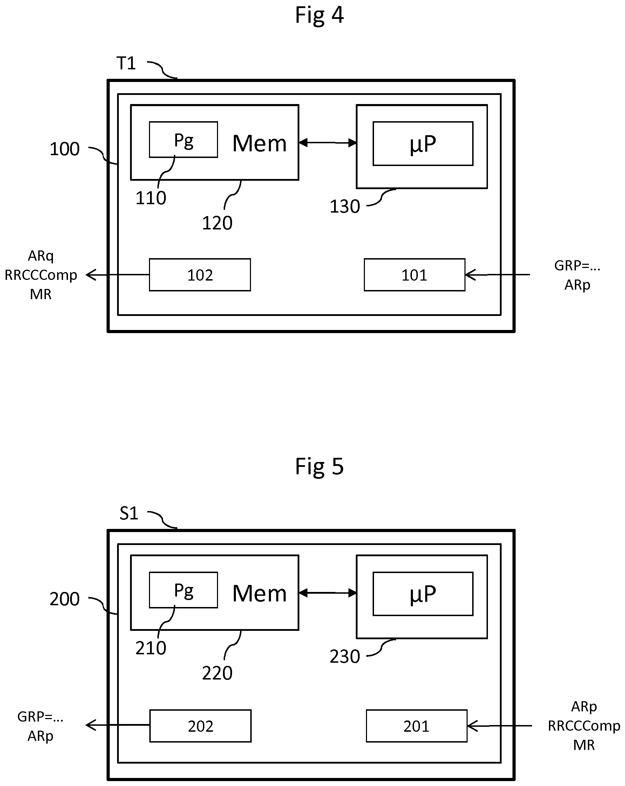

En relation avec la **figure 4****,** on présente maintenant un exemple de structure d'un dispositif d'attachement multiple d'un terminal mobile, selon un aspect de l'invention.

Le dispositif 100 d'attachement met en oeuvre le procédé d'attachement multiple d'un terminal mobile à des points d'accès d'une pluralité de points d'accès à un ou plusieurs réseaux cellulaires, dont différents modes de réalisation viennent d'être décrits.

Un tel dispositif 100 peut être mis en oeuvre dans un terminal mobile T1.

Par exemple, le dispositif 100 comprend un récepteur 101, un émetteur 102, une unité de traitement 130, équipée par exemple d'un microprocesseur µP, et pilotée par un programme d'ordinateur 110, stocké dans une mémoire 120 et mettant en oeuvre le procédé d'attachement selon l'invention. A l'initialisation, les instructions de code du programme d'ordinateur 110 sont par exemple chargées dans une mémoire RAM, avant d'être exécutées par le processeur de l'unité de traitement 130.

Une telle mémoire 120 et un tel processeur de l'unité de traitement 130 sont aptes à, et configurés pour :
- obtenir au travers du récepteur des messages diffusés par des points d'accès de la pluralité, comprenant un identifiant relatif à l'appartenance, à un groupe de risque partagé, d'une ressource utilisée par le point d'accès respectif, dit identifiant GRP,
- effectuer un premier attachement du terminal, à un premier point d'accès de la pluralité,
- effectuer un second attachement du terminal, à un second point d'accès de la pluralité, sélectionné en fonction de son identifiant GRP et de l'identifiant GRP de premier point d'accès.

Avantageusement, l'unité de traitement 130 est également apte à, et configurée pour :
- comparer l'identifiant GRP du premier point d'accès et les identifiants GRP des autres points d'accès de la pluralité, un des autres points d'accès étant sélectionné comme second point d'accès si son identifiant GRP est différent de celui du premier point d'accès,
- faire émettre par l'émetteur, vers l'un des premier ou second points d'accès, un message comprenant l'identifiant GRP de l'autre point d'accès, voire tous les identifiants GRP reçus,
- obtenir au travers du récepteur un message de signalisation dédiée au terminal, comprenant un identifiant relatif à l'appartenance à un groupe de risque partagé d'une ressource du coeur de réseau utilisée par le terminal, dit identifiant GRPC,
- faire émettre par l'émetteur un message de signalisation dédiée au terminal comprenant l'identifiant GRPC.

En relation avec la **figure 5****,** on présente maintenant un exemple de structure d'un dispositif de sélection d'une ressource pour l'attachement multiple d'un terminal mobile, selon un aspect de l'invention.

Le dispositif 200 de sélection met en oeuvre le procédé de sélection d'une ressource pour l'attachement multiple d'un terminal mobile à des points d'accès d'une pluralité de points d'accès à un ou plusieurs réseaux cellulaires, dont différents modes de réalisation viennent d'être décrits.

Un tel dispositif 200 peut être mis en oeuvre dans un point d'accès à un réseau cellulaire, tel que par exemple une station de base S1.

Par exemple, le dispositif 200 comprend un récepteur 201, un émetteur 202, une unité de traitement 230, équipée par exemple d'un microprocesseur µP, et pilotée par un programme d'ordinateur 210, stocké dans une mémoire 220 et mettant en oeuvre le procédé de sélection selon l'invention. A l'initialisation, les instructions de code du programme d'ordinateur 210 sont par exemple chargées dans une mémoire RAM, avant d'être exécutées par le processeur de l'unité de traitement 230.

Une telle mémoire 220 et un tel processeur de l'unité de traitement 230 sont aptes à, et configurés pour :
- faire diffuser par l'émetteur un message vers le terminal et vers d'autres terminaux sous la couverture du point d'accès, comprenant un identifiant relatif à l'appartenance, à un groupe de risque partagé, d'une ressource utilisée par le point d'accès, dit identifiant GRP,
- obtenir au travers du récepteur un message en provenance du terminal comprenant un identifiant GRP d'un autre point d'accès,
- sélectionner une ressource pour le terminal, en fonction de l'identifiant GRP du point d'accès et de l'identifiant GRP de l'autre point d'accès.

Avantageusement, l'unité de traitement 230 est également apte à, et configurée pour :
- obtenir au travers du récepteur un message en provenance du terminal comprenant un identifiant relatif à l'appartenance, à un groupe de risque partagé, d'une ressource du coeur de réseau utilisée par le terminal en association avec l'autre point d'accès, dit identifiant GRPC, et où cet identifiant GRPC est pris en compte dans l'étape de sélection.

On comprend que l'invention permet, pour un terminal mobile attaché à plusieurs stations de base à la fois, d'un ou plusieurs réseaux cellulaires, de distribuer les ressources utilisées par le terminal dans des groupes de risque partagé différents, même si le terminal est en mobilité, entre et sort de veille, ou effectue un ou plusieurs "handovers".

## Revendications

1. **Procédé** d'attachement multiple d'un terminal mobile (T1) à des points d'accès (S1, S5, S9) d'une pluralité de points d'accès (S1-S10) à un ou plusieurs réseaux cellulaires, le procédé étant mis en oeuvre par le terminal et comprenant les étapes suivantes :
• réception (E1; F7) de messages diffusés par des points d'accès de la pluralité, comprenant un identifiant, dit identifiant GRP, relatif à l'appartenance d'une ressource (OF1-OF3) utilisée par le point d'accès respectif, à un ensemble de ressources associées à un facteur de risque commun,
• premier attachement (E2 à E7) du terminal, à un premier point d'accès de la pluralité,
• second attachement (E9 à E14; F12 à F13; F20 à F21) du terminal, à un second point d'accès de la pluralité, sélectionné en fonction de son identifiant GRP et de l'identifiant GRP du premier point d'accès.

2. **Procédé** d'attachement multiple selon la revendication 1, comprenant en outre une étape de comparaison (E8) entre l'identifiant GRP du premier point d'accès et les identifiants GRP des autres points d'accès de la pluralité, un des autres points d'accès étant sélectionné comme second point d'accès si son identifiant GRP est différent de celui du premier point d'accès.

3. **Procédé** d'attachement multiple selon la revendication 2, où les identifiants GRP sont des vecteurs de dimension supérieure à 1 et où l'étape de comparaison comprend une étape de calcul de distance entre l'identifiant GRP du premier point d'accès et les identifiants GRP des autres points d'accès de la pluralité, un des autres points d'accès étant sélectionné si la distance entre son identifiant GRP et celui du premier point d'accès est non nulle.

4. **Procédé** d'attachement multiple selon l'une des revendications précédentes, comprenant une étape d'émission (E9; F2; F5; F8) vers l'un des premier ou second points d'accès d'un message comprenant l'identifiant GRP de l'autre point d'accès.

5. **Procédé** d'attachement multiple selon l'une des revendications précédentes, comprenant une étape d'émission (E9; F2; F5; F8) vers le premier point d'accès et vers le second point d'accès d'un message comprenant les identifiants GRP reçus.

6. **Procédé** d'attachement multiple selon l'une des revendications précédentes, où l'étape de premier attachement et/ou l'étape de second attachement comprend une étape de réception (E7, E14) d'un message de signalisation dédiée au terminal, comprenant un identifiant, dit identifiant GRPC, relatif à l'appartenance d'une ressource (M1, M2) du coeur de réseau (CN) utilisée par le terminal, à un ensemble de ressources associées à un facteur de risque commun.

7. **Procédé** d'attachement multiple selon la revendication 6, où l'étape de second attachement comprend une étape d'émission (E9) d'un message de signalisation dédiée au terminal comprenant l'identifiant GRPC.

8. **Procédé** de sélection d'une ressource pour l'attachement multiple d'un terminal mobile (T1) à des points d'accès (S1, S5, S9) d'une pluralité de points d'accès (S1-S10) à un ou plusieurs réseaux cellulaires, le procédé étant mis en oeuvre par un des points d'accès de la pluralité et comprenant les étapes suivantes :
• diffusion (E1; F7) d'un message vers le terminal et vers d'autres terminaux sous la couverture du point d'accès, comprenant un identifiant, dit identifiant GRP, relatif à l'appartenance d'une ressource utilisée par le point d'accès, à un ensemble de ressources associées à un facteur de risque commun,
• réception (E9; F2, F5; F8) d'un message en provenance du terminal comprenant un identifiant GRP d'un autre point d'accès,
• sélection d'une ressource pour le terminal, en fonction de l'identifiant GRP du point d'accès et de l'identifiant GRP de l'autre point d'accès.

9. **Procédé** de sélection selon la revendication précédente, où le message du terminal comprend en outre un identifiant, dit identifiant GRPC, relatif à l'appartenance d'une ressource (M1, M2) du coeur de réseau (CN) utilisée par le terminal en association avec l'autre point d'accès, à un ensemble de ressources associées à un facteur de risque commun, et où cet identifiant GRPC est pris en compte dans l'étape de sélection.

10. **Dispositif** (100) d'attachement multiple d'un terminal mobile (T1) à des points d'accès (S1, S5, S9) d'une pluralité de points d'accès (S1-S10) à un ou plusieurs réseaux cellulaires, le dispositif comprenant un récepteur (101), un émetteur (102), un processeur (130) et une mémoire (120) couplée au processeur avec des instructions destinées à être exécutées par le processeur pour :
• recevoir des messages diffusés par des points d'accès de la pluralité, comprenant un identifiant, dit identifiant GRP, relatif à l'appartenance d'une ressource utilisée par le point d'accès respectif, à un ensemble de ressources associées à un facteur de risque commun,
• effectuer un premier attachement du terminal, à un premier point d'accès de la pluralité,
• effectuer un second attachement du terminal, à un second point d'accès de la pluralité, sélectionné en fonction de son identifiant GRP et de l'identifiant GRP du premier point d'accès.

11. **Dispositif** (200), dans un point d'accès d'un réseau cellulaire, de sélection d'une ressource pour l'attachement multiple d'un terminal mobile (T1) à des points d'accès (S1, S5, S9) d'une pluralité de points d'accès (S1-S10) à un ou plusieurs réseaux cellulaires, le dispositif comprenant un récepteur (201), un émetteur (202), un processeur (230) et une mémoire (220) couplée au processeur avec des instructions destinées à être exécutées par le processeur pour :
• diffuser un message vers le terminal et vers d'autres terminaux sous la couverture du point d'accès, comprenant un identifiant, dit identifiant GRP, relatif à l'appartenance d'une ressource utilisée par le point d'accès, à un ensemble de ressources associées à un facteur de risque commun,
• recevoir un message en provenance du terminal comprenant un identifiant GRP d'un autre point d'accès,
• sélectionner une ressource pour le terminal, en fonction de l'identifiant GRP du point d'accès et de l'identifiant GRP de l'autre point d'accès.

12. **Programme d'ordinateur** (110), comprenant des instructions pour la mise en oeuvre des étapes du procédé d'attachement multiple selon la revendication 1, lorsque ce programme est exécuté par un processeur dans un terminal mobile.

13. **Support d'informations** lisible par un terminal mobile (T1), et comportant des instructions d'un programme d'ordinateur (110) conforme à la revendication 12.

14. **Programme d'ordinateur** (210), comprenant des instructions pour la mise en oeuvre des étapes du procédé de sélection d'une ressource pour l'attachement multiple selon la revendication 8, lorsque ce programme est exécuté par un processeur dans un point d'accès d'un réseau cellulaire.

15. **Support d'informations** lisible par un point d'accès (S1) à un réseau cellulaire, et comportant des instructions d'un programme d'ordinateur (210) conforme à la revendication 14.

## Patentansprüche

1. Verfahren zur Mehrfachverbindung eines mobilen Endgeräts (T1) mit Zugangspunkten (S1, S5, S9) einer Vielzahl von Zugangspunkten (S1-S10) zu einem oder mehreren zellularen Netzen, wobei das Verfahren vom Endgerät durchgeführt wird und die folgenden Schritte enthält:
• Empfang (E1; F7) von von Zugangspunkten der Vielzahl übertragenen Nachrichten, die eine Kennung, Kennung GRP genannt, bezüglich der Zugehörigkeit einer vom Zugangspunkt genutzten Ressource (OF1-OF3) zu einer Einheit von einem gemeinsamen Risikofaktor zugeordneten Ressourcen enthalten,
• erste Verbindung (E2 bis E7) des Endgeräts mit einem ersten Zugangspunkt der Vielzahl,
• zweite Verbindung (E9 bis E14; F12 bis F13; F20 bis F21) des Endgeräts mit einem zweiten Zugangspunkt der Vielzahl, ausgewählt abhängig von seiner Kennung GRP und der Kennung GRP des ersten Zugangspunkts.

2. Mehrfachverbindungsverfahren nach Anspruch 1, Das außerdem einen Schritt des Vergleichs (E8) zwischen der Kennung GRP des ersten Zugangspunkts und den Kennungen GRP der anderen Zugangspunkte der Vielzahl enthält, wobei einer der anderen Zugangspunkte als zweiter Zugangspunkt ausgewählt wird, wenn seine Kennung GRP sich von derjenigen des ersten Zugangspunkts unterscheidet.

3. Mehrfachverbindungsverfahren nach Anspruch 2, wobei die Kennungen GRP Vektoren größerer Abmessung als 1 sind und wobei der Vergleichsschritt einen Schritt der Abstandsberechnung zwischen der Kennung GRP des ersten Zugangspunkts und den Kennungen GRP der anderen Zugangspunkte der Vielzahl enthält, wobei einer der anderen Zugangspunkte ausgewählt wird, wenn der Abstand zwischen seiner Kennung GRP und derjenigen des ersten Zugangspunkts ungleich Null ist.

4. Mehrfachverbindungsverfahren nach einem der vorhergehenden Ansprüche, das einen Sendeschritt (E9; F2; F5; F8) einer die Kennung GRP des anderen Zugangspunkts enthaltenden Nachricht zu einem der ersten und zweiten Zugangspunkte enthält.

5. Mehrfachverbindungsverfahren nach einem der vorhergehenden Ansprüche, das einen Sendeschritt (E9; F2; F5; F8) einer die empfangenen Kennungen GRP enthaltenden Nachricht zum ersten Zugangspunkt und zum zweiten Zugangspunkt enthält.

6. Mehrfachverbindungsverfahren nach einem der vorhergehenden Ansprüche, wobei der Schritt der ersten Verbindung und/oder der Schritt der zweiten Verbindung einen Schritt des Empfangs (E7, E14) einer für das Endgerät bestimmten Signalisierungsnachricht enthält, die eine Kennung, Kennung GRPC genannt, bezüglich der Zugehörigkeit einer vom Endgerät verwendeten Ressource (M1, M2) des Netzkerns (CN) zu einer Einheit von einem gemeinsamen Risikofaktor zugeordneten Ressourcen enthält.

7. Mehrfachverbindungsverfahren nach Anspruch 6, wobei der Schritt der zweiten Verbindung einen Schritt des Sendens (E9) einer für das Endgerät bestimmten, die Kennung GRPC enthaltenden Signalisierungsnachricht enthält.

8. Auswahlverfahren einer Ressource für die Mehrfachverbindung eines mobilen Endgeräts (T1) mit Zugangspunkten (S1, S5, S9) einer Vielzahl von Zugangspunkten (S1-S10) zu einem oder mehreren zellularen Netzen, wobei das Verfahren von einem der des Zugangspunkte der Vielzahl durchgeführt wird und die folgenden Schritte enthält:
• Übertragung (E1; F7) einer Nachricht an das Endgerät und an andere Endgeräte im Versorgungsgebiet des Zugangspunkts, die eine Kennung, Kennung GRP genannt, bezüglich der Zugehörigkeit einer vom Zugangspunkt verwendeten Ressource zu einer Einheit von einem gemeinsamen Risikofaktor zugeordneten Ressourcen enthält,
• Empfang (E9; F2, F5; F8) einer Nachricht vom Endgerät, die eine Kennung GRP eines anderen Zugangspunkts enthält,
• Auswahl einer Ressource für das Endgerät abhängig von der Kennung GRP des Zugangspunkts und der Kennung GRP des anderen Zugangspunkts.

9. Auswahlverfahren nach dem vorhergehenden Anspruch, wobei die Nachricht des Endgeräts außerdem eine Kennung, Kennung GRPC genannt, bezüglich der Zugehörigkeit einer vom Endgerät zusammen mit dem anderen Zugangspunkt verwendeten Ressource (M1, M2) des Netzkerns (CN) zu einer Einheit von einem gemeinsamen Risikofaktor zugeordneten Ressourcen enthält, und wobei diese Kennung GRPC im Auswahlschritt berücksichtigt wird.

10. Vorrichtung (100) zur Mehrfachverbindung eines mobilen Endgeräts (T1) mit Zugangspunkten (S1, S5, S9) einer Vielzahl von Zugangspunkten (S1-S10) zu einem oder mehreren zellularen Netzen, wobei die Vorrichtung einen Empfänger (101), einen Sender (102), einen Prozessor (130) und einen mit dem Prozessor gekoppelten Speicher (120) enthält, mit Anweisungen, die dazu bestimmt sind vom Prozessor ausgeführt zu werden, um:
• von Zugangspunkten der Vielzahl übertragene Nachrichten zu empfangen, die eine Kennung, Kennung GRP genannt, bezüglich der Zugehörigkeit einer vom Zugangspunkt verwendeten Ressource zu einer Einheit von einem gemeinsamen Risikofaktor zugeordneten Ressourcen enthält,
• eine erste Verbindung des Endgeräts mit einem ersten Zugangspunkt der Vielzahl auszuführen,
• eine zweite Verbindung des Endgeräts mit einem zweiten Zugangspunkt der Vielzahl auszuführen, der abhängig von seiner Kennung GRP und der Kennung GRP des ersten Zugangspunkts ausgewählt wird.

11. Vorrichtung (200), in einem Zugangspunkt eines zellularen Netzes, zur Auswahl einer Ressource für die Mehrfachverbindung eines mobilen Endgeräts (T1) mit Zugangspunkten (S1, S5, S9) einer Vielzahl von Zugangspunkten (S1-S10) zu einem oder mehreren zellularen Netzen, wobei die Vorrichtung einen Empfänger (201), einen Sender (202), einen Prozessor (230) und einen mit dem Prozessor gekoppelten Speicher (120) enthält, mit Anweisungen, die dazu bestimmt sind, vom Prozessor ausgeführt zu werden, um:
• eine Nachricht an das Endgerät und an andere Endgeräte im Versorgungsgebiet des Zugangspunkts zu übertragen, die eine Kennung, Kennung GRP genannt, bezüglich der Zugehörigkeit einer vom Zugangspunkt verwendeten Ressource zu einer Einheit von einem gemeinsamen Risikofaktor zugeordneten Ressourcen enthält,
• eine Nachricht vom Endgerät zu empfangen, die eine Kennung GRP eines anderen Zugangspunkts enthält,
• eine Ressource für das Endgerät abhängig von der Kennung GRP des Zugangspunkts und der Kennung GRP des anderen Zugangspunkts auszuwählen.

12. Computerprogramm (110), das Anweisungen zur Durchführung der Schritte des Mehrfachverbindungsverfahrens nach Anspruch 1 enthält, wenn dieses Programm von einem Prozessor in einem mobilen Endgerät ausgeführt wird.

13. Informationsträger, der von einem mobilen Endgerät (T1) lesbar ist und Anweisungen eines Computerprogramms (110) nach Anspruch 12 aufweist.

14. Computerprogramm (210), das Anweisungen zur Durchführung der Schritte des Auswahlverfahrens einer Ressource zur Mehrfachverbindung nach Anspruch 8 enthält, wenn dieses Programm von einem Prozessor in einem Zugangspunkt eines zellularen Netzes ausgeführt wird.

15. Informationsträger, der von einem Zugangspunkt (S1) zu einem zellularen Netz lesbar ist ist und Anweisungen eines Computerprogramms (210) nach Anspruch 14 aufweist.

## Claims

1. Method for the multiple attachment of a mobile terminal (T1) to access points (S1, S5, S9) of a plurality of access points (S1-S10) to one or more cellular networks, the method being implemented by the terminal and comprising the following steps:
• receiving (E1; F7) messages broadcast by access points of the plurality, comprising an identifier, called GRP identifier, relating to the fact that a resource (OF1-OF3) used by the respective access point belongs to a set of resources associated with a common risk factor,
• first attachment (E2 to E7) of the terminal to a first access point of the plurality,
• second attachment (E9 to E14; F12 to F13; F20 to F21) of the terminal to a second access point of the plurality, selected on the basis of its GRP identifier and of the GRP identifier of the first access point.

2. Multiple attachment method according to Claim 1, furthermore comprising a step of comparing (E8) the GRP identifier of the first access point and the GRP identifiers of the other access points of the plurality, one of the other access points being selected as the second access point if its GRP identifier is different from that of the first access point.

3. Multiple attachment method according to Claim 2, wherein the GRP identifiers are vectors of a dimension greater than 1, and wherein the comparison step comprises a step of calculating the distance between the GRP identifier of the first access point and the GRP identifiers of the other access points of the plurality, one of the other access points being selected if the distance between its GRP identifier and that of the first access point is not zero.

4. Multiple attachment method according to one of the preceding claims, comprising a step of transmitting (E9; F2; F5; F8), to one of the first or second access points, a message comprising the GRP identifier of the other access point.

5. Multiple attachment method according to one of the preceding claims, comprising a step of transmitting (E9; F2; F5; F8) a message comprising the received GRP identifiers to the first access point and to the second access point.

6. Multiple attachment method according to one of the preceding claims, wherein the first attachment step and/or the second attachment step comprises a step of receiving (E7, E14) a signalling message dedicated to the terminal, comprising an identifier, called GRPC identifier, relating to the fact that a core network (CN) resource (M1, M2) used by the terminal belongs to a set of resources associated with a common risk factor.

7. Multiple attachment method according to Claim 6, wherein the second attachment step comprises a step of transmitting (E9) a signalling message dedicated to the terminal comprising the GRPC identifier.

8. Method for selecting a resource for the multiple attachment of a mobile terminal (T1) to access points (S1, S5, S9) of a plurality of access points (S1-S10) to one or more cellular networks, the method being implemented by one of the access points of the plurality and comprising the following steps:
• broadcasting (E1; F7) a message to the terminal and to other terminals within the coverage of the access point, comprising an identifier, called GRP identifier, relating to the fact that a resource used by the access point belongs to a set of resources associated with a common risk factor,
• receiving (E9; F2, F5; F8) a message from the terminal comprising a GRP identifier of another access point,
• selecting a resource for the terminal, on the basis of the GRP identifier of the access point and of the GRP identifier of the other access point.

9. Selection method according to the preceding claim, wherein the message from the terminal furthermore comprises an identifier, called GRPC identifier, relating to the fact that a core network (CN) resource (M1, M2) used by the terminal in association with the other access point belongs to a set of resources associated with a common risk factor, and wherein this GRPC identifier is taken into account in the selection step.

10. Device (100) for the multiple attachment of a mobile terminal (T1) to access points (S1, S5, S9) of a plurality of access points (S1-S10) to one or more cellular networks, the device comprising a receiver (101), a transmitter (102), a processor (130) and a memory (120) coupled to the processor with instructions intended to be executed by the processor in order to:
• receive messages broadcast by access points of the plurality, comprising an identifier, called GRP identifier, relating to the fact that a resource used by the respective access point belongs to a set of resources associated with a common risk factor,
• perform a first attachment of the terminal to a first access point of the plurality,
• perform a second attachment of the terminal to a second access point of the plurality, selected on the basis of its GRP identifier and of the GRP identifier of the first access point.

11. Device (200), in an access point of a cellular network, for selecting a resource for the multiple attachment of a mobile terminal (T1) to access points (S1, S5, S9) of a plurality of access points (S1-S10) to one or more cellular networks, the device comprising a receiver (201), a transmitter (202), a processor (230) and a memory (220) coupled to the processor with instructions intended to be executed by the processor in order to:
• broadcast a message to the terminal and to other terminals within the coverage of the access point, comprising an identifier, called GRP identifier, relating to the fact that a resource used by the access point belongs to a set of resources associated with a common risk factor,
• receive a message from the terminal comprising a GRP identifier of another access point,
• select a resource for the terminal, on the basis of the GRP identifier of the access point and of the GRP identifier of the other access point.

12. Computer program (110), comprising instructions for implementing the steps of the multiple attachment method according to Claim 1 when this program is executed by a processor in a mobile terminal.

13. Information medium able to be read by a mobile terminal (T1) and containing instructions of a computer program (110) according to Claim 12.

14. Computer program (210), comprising instructions for implementing the steps of the method for selecting a resource for multiple attachment according to Claim 8 when this program is executed by a processor in an access point of a cellular network.

15. Information medium able to be read by an access point (S1) to a cellular network and containing instructions of a computer program (210) according to Claim 14.
